# EUROPEAN PATENT APPLICATION

(11) **EP 2 911 098 A1**
(43) Date of publication of application: **26.08.2015**
(21) Application number: 14155939.3
(22) Date of filing: 20.02.2014
(51) Int. Cl.: G06Q 10/04, G06Q 50/06

(54) **Determining an indicator of willingness to supply or consume in a market**

(71) Applicant: NXP B.V., 5656 AG Eindhoven (NL)
(72) Inventor: Van Roermund, Timotheus Arthur, Redhill, Surrey RH1 1SH (GB); Maaskant, Hugh, Redhill, Surrey RH1 1SH (GB); Pennings, Maarten Christiaan, Redhill, Surrey RH1 1SH (GB)
(74) Representative: Miles, John Richard

(57) **Abstract**

Presented is a method for determining an indicator of willingness to supply or consume in a market. The method comprises determining the indicator of willingness based on a price distribution of various prices in the market.

## Description

### FIELD OF THE INVENTION

The invention relates to markets, and more particularly to determining an indicator of willingness to supply or consume in a market.

### BACKGROUND

In a market, an important consideration for a participant is how to determine an indication of willingness to supply or consume in the market. An indicator of willingness may be expressed in the form of a bid on a market.

One example of a market system is the next generation energy systems also known as "Smart Crrids". A smart grid consists of cooperating devices that generate and consume energy and try to do this in a smart way. In such a cooperative energy system, devices convey their willingness to consume or produce energy, and a common way to express such willingness is in the form of a bid on a market.

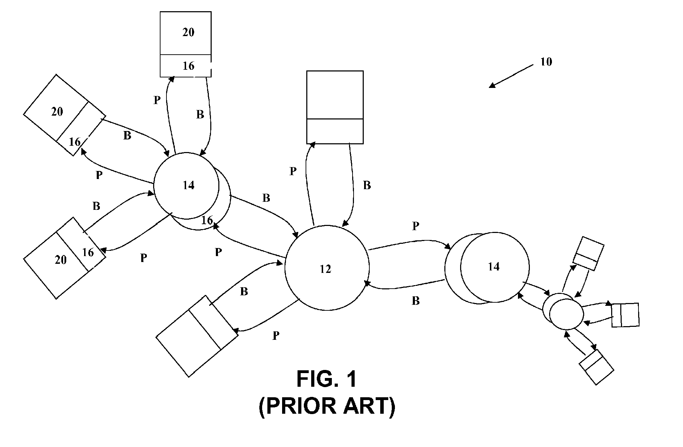

Referring to Figure 1, there is depicted a known smart grid 10 that uses a market with bids and prices.

The root of the system is formed by an auctioneer agent 12, which is a unique agent that handles price forming (i.e. the search for an equilibrium price). In order to provide scalability, concentrator agents 14 are added to the structure of the system as tree nodes.

An agent 16 on a device 20 typically attempts to operate a process associated with the device 20 in an economically optimal way. In order to do so, the agent 16 communicates its latest bid B to the auctioneer agent 12 and receives price P updates from the auctioneer agent 12. Its own latest bid B, together with the current price P, determines the amount of energy the agent 16 is obliged to produce or consume.

In other words, the distributed energy system of Figure 1 aims to balance energy demands (e.g. the consumption side) with energy supply offerings (e.g. the production side). In more detail, the balancing is performed as follows: devices 20 send bids B upstream, which reflect current energy consumption/production needs. The next upstream node (i.e. the concentrator agent 14) aggregates the bids of the different devices 20 and sends the aggregated bid up to the next concentrator and so on, until it reaches the top node (i.e. the auctioneer agent 12). The top node has the complete aggregated bid which entails an overview of the total energy demand and supply in the network. Based on this, it determines a market equilibrium ("market price"), which is sent downstream to the different devices 20 again via the concentrators (fanning out) for scalability. The devices 20 therefore see the same equilibrium (market price), and this may vary with time. The devices 20 can then adjust actual energy production and/or consumption based on the new market equilibrium (market price) at a particular time. They may also send new bids at any time (e.g. when the fridge compartment gets too warm).

A problem associated with having 'just a single price' is that it needs to convey all factors (such as availability, flexibility, quality, etc.) in a single bid. If a bid is too conservative (e.g. too high), such other factors may be underutilized. Conversely, if a bid is too optimistic (e.g. too low), such other factors may be compromised (thus resulting in undesirable outcomes, such as laundry being available too late, a shower being too cold, or an electrical car not being adequately charged, for example).

### BRIEF SUMMARY OF THE INVENTION

According to an aspect of the invention, there is provided a method of determining an indicator of willingness to supply or consume in a market system, the method comprising: determining the indicator of willingness based on a probability distribution of prices in the market system.

The indicator of willingness may comprise a least one of: a price representing a price willing to be paid/received; a volume value representing an amount willing to be supplied or consumed; a rate value representing a rate of consumption or production; and a time value representing a window of consumption or production.

Thus, embodiments may propose a strategy for securing a product, service, commodity or the like in a market system. The strategy may make use of information about a time-variable pricing of consumption or supply within the system in order to determine an optimal price which may ensure that a predetermined supply or consumption constraint is met. Such pricing information may include a probability distribution of historical prices of consumption or supply in the system. Embodiments may therefore make use of historical data to determine an indicator of willingness that is improved or optimised in view of previous activity in the market system.

Further, a value of a product, service, commodity or the like may be negative for some or all prices. This means that for such prices the product, service, commodity or the like will be produced instead of consumed. Put another way, an indicator of willingness may also map a negative price to a product, service, commodity or the like.

Embodiments may be provided with information about the price distribution (such as the variation of equilibrium market prices against time) or may calculate the price distribution. This may depend upon whether such information about the probability distribution is made available or if only information about the various prices is available.

According to another aspect of the invention there is provided a system adapted to determine an indicator of willingness to supply or consume in a market, the system comprising: a processing unit adapted to determine the indicator of willingness based on a probability distribution of prices in the market.

Embodiments may comprise a distribution calculation unit adapted to calculate the probability distribution of prices in the market. Embodiments may further comprise a communication unit adapted to communicate the indicator of willingness to at least one participant of the market.

According to an embodiment, there is provided a method of determining an indicator of willingness to supply or consume energy in a distributed energy system comprising a plurality of devices adapted to supply or consume energy at various prices, the method comprising: determining the indicator of willingness based on a probability distribution of prices of energy supply or consumption in the distributed energy system. The indicator of willingness may comprise a bid price representing a price at which energy is willing to be purchased or sold. Thus, embodiments may propose a bidding strategy for securing the supply or consumption of energy in a distributed energy system. The strategy may make use of information about the time-variable pricing of energy consumption or supply within the system in order to determine an optimal bid or offer price which may ensure that a predetermined energy supply or consumption constraint is met. Such pricing information may include a probability distribution of historical prices of energy consumption or supply in the system.

According to another embodiment, there is provided a system adapted to determine an indicator of willingness to supply or consume energy in a distributed energy system comprising a plurality of devices adapted to supply or consume energy at various prices, the system comprising: a processing unit adapted to determine the indicator of willingness based on a probability distribution of prices of energy supply or consumption in the distributed energy system. Embodiments may comprise a distribution calculation unit adapted to calculate the probability distribution of various prices of energy supply or consumption in the distributed energy system. Embodiments may further comprise a communication unit adapted to communicate the indicator of willingness to at least one device of the distributed energy system.

Accordingly, embodiments may be employed by a device which is adapted to supply or consume energy to/from a distributed energy system, wherein the device secures the supply or consumption of energy at a price. The price of the supplied energy may be dictated by numerous factors including: demand for energy in the system; the number of energy suppliers; the time of energy supply; availability of energy in the system; the cost of supplying/delivering energy to the device; and the amount of energy required. By way of example, the device may employ an embodiment to determine an indicator of willingness to consume energy (such as a price that is willing to be paid). In other words, a device according to an embodiment may determine a bid in a way which may help to ensure that the device will secure an energy supply that meets predetermined requirements.

Embodiments may be employed in a market where a participant is required to provide (or agree to) an indication of willingness to supply or consume. Such markets may, for example, include markets for trading products, services, commodities or the like.

According to another aspect of the invention there is provided a computer program product for determining an indicator of willingness to supply or consume in a market system. The computer program product may comprise a computer-readable storage medium having computer-readable program code embodied therewith, the computer-readable program code configured to perform all of the steps of a method according to an embodiment of the invention.

The system may be a microprocessor, a microchip or a processing platform. Therefore, the processor unit may be a central processing unit (CPU) or a processor core. Proposed embodiments may employ components that are typically present in a processing system (a processor unit or CPU, memory, and peripherals, all connected by a communication bus/bridge).

Embodiments may particularly advantageous for markets where prices fluctuate but have an element of predictability. For example, a market may have different prices that cycle over various time periods, such as day/night, workday/weekend, and summer/winter prising cycles.

Embodiments may also be useful where a participant needs to secure supply or consumption no later than a predetermined time. Taking into account such a constraint, an embodiment may automatically and repeatedly determine an indicator of willingness until the required supply or consumption is obtained, and the determination may take account of the remaining time so as to ensure that the required supply or consumption is obtained by the predetermined time.

### BRIEF DESCRIPTION OF THE DRAWINGS

Preferred embodiments of the present invention will now be described, by way of example only, with reference to the following drawings in which:
Figure 1 depicts a known distributed energy system that uses a market with bids and prices;
Figure 2 is a graph showing a sloped line which depicts how the level of stored charge in an energy storage device varies with time as the device is charged;
Figure 3 shows an exemplary probability distribution for a distributed energy system;
Figure 4 is a flow diagram of a method according to an embodiment; and
Figure 5 is a schematic block diagram of a device adapted to supply or consume energy to/from a distributed energy system according to an embodiment.

### DETAILED DESCRIPTION OF THE EMBODIMENTS

Embodiments propose an approach to determining an optimal indicator of willingness in a market. The proposed approach uses a probability distribution of prices in a market. In this way, proposed embodiments make use of information about the pricing fluctuations/variations within the market in order to determine an optimal indicator of willingness which may ensure that a consumption or supply constraint is met.

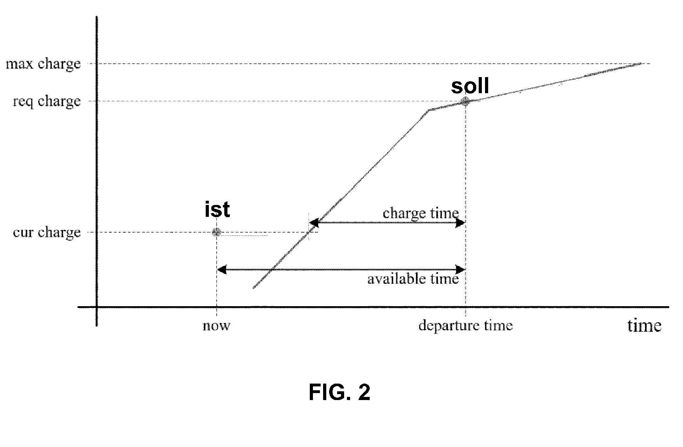

An exemplary embodiment will now be described by considering the energy consumption constraints of a device that consumes energy from a distributed energy system through the charging of an energy storage device (such as a battery) for the purpose of electric-powered transportation (e.g. an electric car). Figure 2 is a graph including a sloped line which depicts how the level of stored charge in the energy storage device varies with time as the device is charged. Here, charging of the energy storage device can start and stop (using energy) at random moments, building up in charge over time. Such a charging scheme may not hold for other devices. For example, other devices may require continual supply or consumption of energy between two points in time (e.g. from start until completion). Alternatively, some devices may be required to maintain a minimum level of charge at all times, whilst others may consume energy at the same time as being supplied energy.

The device has two user parameters that determine its time flexibility: the point in time ("departure time") by when the device should be ready (i.e. charged) and the amount of energy required ("req charge"). Other parameters may play a role in other embodiments, but they may be much less under direct control of a user. By way of example, other parameters for consideration may be the current time of day, the charge curve (i.e. charging behaviour) of the device, and the age of the device.

Here, the departure time (i.e. the time by which the device is required to be ready) is a user-entered parameter. The amount of energy required (req charge) is a parameter derived from the desired use of the device which is entered by the user.

The time flexibility is derived from the charge curve (the solid sloped line in Figure 2), which is a characteristic of the (battery in the) device. The required charge defines a "soll" level of the battery. The current charge ("cur charge") of the battery (which is measured or tracked) defines the "ist" level of the battery. These two charge levels can be used to determine the charge time.

Assuming that the use of the device is planned in advance, the available time is greater than the charge time. If not, there is not enough time to charge the battery enough for the desired use.

We define the flexibility (or "F") as the ratio of the charge time and the available time.

If prices are assumed stable (i.e. do not fluctuate), it is proposed that the charger should charge the battery of the device during time fraction F of the available time.

However, as has already been explained above in the Background section, the market equilibrium price may be for a particular point in time, and so this price may vary/fluctuate with time. It is proposed to take account of such variation of the price with time.

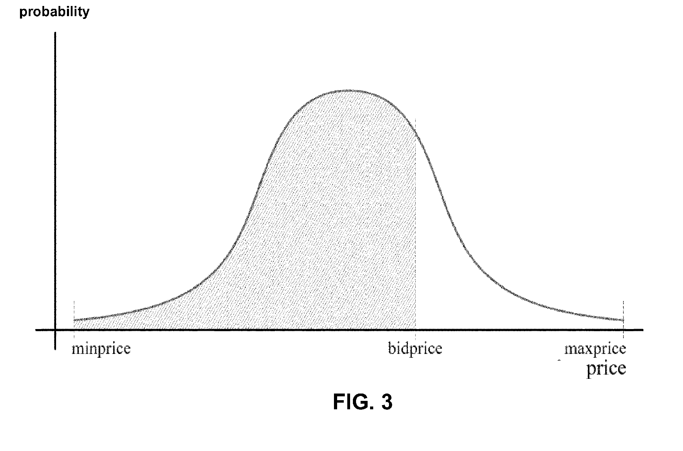

If one considers the market price as a function of time, it will be seen to vary. For example, if more solar or wind energy is available, the market price may drop, and if there is an event of public interest, the energy demand may go up (e.g. to power TV sets) and the market price may go up. From such dynamics, one can construct a probability distribution (function) which shows how probable each price is.. Such a probability distribution is depicted in Figure 3 which shows a probability distribution for prices in the distributed energy system of this example.

The curve of the probability distribution portrays information about the (relative) occurrence of various market prices in the past. This may be used to "predict" the future and establish a bid that will be as low as possible but still (statistically) meet an objective.

It will be understood that the probability distribution is defined over a given time period, the simplest being from a predetermined start time until a current time.

Here, the probability distribution shows a minimum market price ("minprice") and a maximum market price ("maxprice"), but other systems may not set such minimum and maximum prices. However, in either case, the total area under the probability distribution is equated to 1. It is then proposed to determine the bid price ("bidprice") to be the price for which the area under the probability distribution to the left (e.g. the shaded portion of the curve in Figure 3) equals the time fraction F.

In other words, the bid price is determined to be the price in the probability distribution that splits the area under probability distribution into first and second areas, wherein the ratio of the first area to the total area under the curve is equal to the ratio of the charge time to available time.

It is noted that, in the example described above, the device is charged such that it has just sufficient amount of energy at the latest possible moment (i.e. at departure time). In practical embodiments, a safety or error margin may need to be added, for example by pretending that the available time for charging is shorter than it actually is, and/or pretending that the trip distance is longer than it actually is..

Also, it is noted that the probability distribution may not be fixed in time. Thus, the shape of the probability distribution may vary with time. An example is inflation, if the prices go up the probability distribution will shift to the right.

Also, markets may exhibit patterns over time, such as a daily, weekly, and/or yearly cycle. This can be used to use a probability distribution that matches the available time period, e.g. from noon to 8:00 pm if that is the (charging) period. On Monday 18:00, the probability distribution may differ considerably from the curve for 04:00 on Tuesday. However, it may be that the probability distribution at Tuesday 18:00 is the same or similar to the probability distribution for Monday 18:00, but significantly different from the probability distribution for Saturday 18:00. Furthermore, the probability distribution for Monday 18:00 in winter may differ significantly from the probability distribution for Monday 18:00 in summer.

Even furthermore, a market may exhibit patterns associated with other factors, such as the predicted weather, scheduled events of public interest, etc. For example, if a weather forecast indicates that next week will be cold, windy and wet, it may be assumed that the probability distribution will shift to the right (to reflect expected higher prices).

It is therefore preferable to choose the probability distribution so as to correctly reflect the appropriate point in time.

The better the price probability distribution matches the current situation, the better the determined bid will be. Thus, it is preferred to employ a probability curve specific to the current moment in time and this may be obtained from historical pricing assuming some cyclic behaviour. For example, energy prices in a distributed energy system may have one or more recurring patterns and so such recurring pattern(s) may be used to determine a probability distribution for a specific point in time. It may be even more preferable to account for variation in the prices between "now" and the "departure time" for example. This may be of particular importance when a significant change in pricing is expected to occur.

Nonetheless, it will be understood that it may be perfectly acceptable/appropriate to use a single probability distribution as an approximation.

Also, information regarding prices in the market may be stored for re-use at a later time. Thus, embodiments may use pricing information including current and/or historical prices.

It is noted, however, that historical data may lose accuracy over time (for example, due to price inflation). Embodiments may therefore ignore and/or delete historical pricing information which is older than a predetermined value.

Further, the power level can be negative for some or all prices. This means that for those prices the device will produce instead of consume. Put another way, a bid can also map a negative price to a power level.

Other factors may also be taken into consideration to refine the determined price. For example, other parameters may be used when determining an indicator of willingness, such as the following:
- A amount willing to be supplied or consumed;
- A rate at which supply or consumption will take place;
- A time at or during which supply or consumption will take place.

Such parameters may be linked with each other and/or with a bid price to form a multi-faceted indicator of willingness.

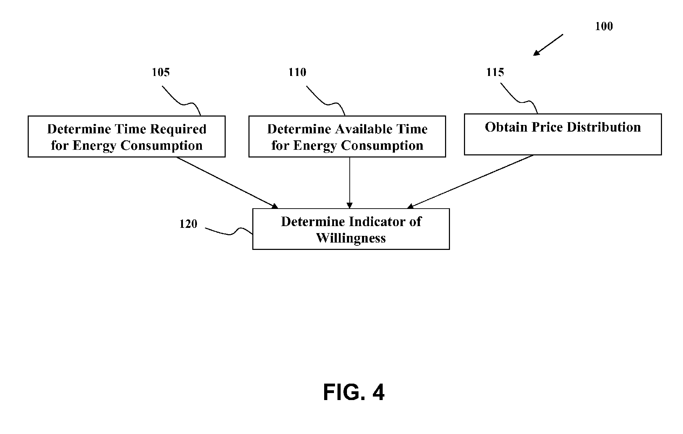

Turning now to Figure 4, there is depicted a flow diagram of a method 100 according to an embodiment of the invention.

In step 105, the amount of time required for energy consumption is determined. This may be done based on a user input which specifies particular usage criteria, which in turn dictates how much energy will be required. Based on the amount of energy required, the amount of time required can be calculated in a straightforward manner, for example using known energy consumption characteristic of the device(s). Alternatively, the amount of time required for energy consumption may be simply determined based on supplied information which defines the amount of time required.

In step 110, the amount of time available for energy consumption is determined. Again, this may be done based on user-provided information which specifies an available time window for example. Alternatively, the amount of time available for energy consumption may calculated using various time values, such as the current time, the latest time at which energy consumption is permitted, and one or more time windows during which energy consumption is not permitted, for example.

In step 115, the probability distribution of various prices of energy supply in the distributed energy system is obtained. Here, the probability distribution may be calculated from pricing information that is available in the system. Such pricing information may comprise information about current and/or historical market prices. Alternatively, instead of calculating the probability distribution, the probability distribution may simply be provided by a user or a device, for example.

Next, in step 120, an indicator of willingness to consume energy in the distributed energy system is determined based on the obtained probability distribution. Here, determining the indicator of willingness comprises calculating a price in the probability distribution that splits the area under a probability density/mass function of probability distribution into first and second areas, wherein the ratio of the first area to the total area under the curve is equal to the ratio of the amount of time required for energy consumption (determined in step 105) to the amount of time available for energy consumption (determined in step 110). The indicator of willingness is then determined to be equal to the calculated price.

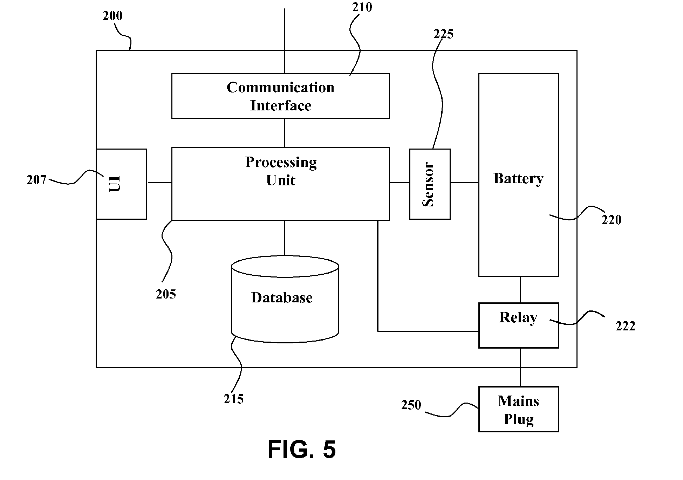

Referring now to Figure 5, there is shown a schematic block diagram of a device 200 (such as an electric car or scooter) that is adapted to supply or consume energy to/from a distributed energy system.

The device comprises a processing unit 205 adapted to determine an indicator of willingness to supply or consume energy based on a probability distribution of the various prices of energy supply or consumption in the distributed energy system. In other words, the processing unit 205 is adapted to perform a method according to an embodiment of the invention, such as that depicted in Figure 4 for example.

Here, the processing unit 205 is connected to a user interface 207, a communication interface 210, a database 215, and a battery 220 (via a sensor 225).

The user interface 207 is adapted to communicate information to and from a user of the device 200. Here, the user interface 207 is adapted to receive information about usage constraints and/or requirement from a user and transmit such information to the processing unit 205.

The communication interface 210 is adapted to communicate information to and from the processing unit 205 of the device. Here, the communication interface 210 is adapted to receive information about prices within a distributed energy system, and to transmit a determined indicator of willingness from the processing unit to another device (such as an auctioneer agent) of a distributed energy system. The communication interface is also adapted to receive one or more user inputs (from other devices for example) and provide the input(s) to the processing unit 205).

The database 215 is adapted to store information relating to prices within a distributed energy system. Such information may be associated with one or more particular points in time. In this way, the database can store historical pricing data. Since the processing unit 205 is connected to the database 215, the processing unit 205 may access information stored in the database 215 for use in determining an indicator of willingness. Further, the processing unit 205 can supply information about a determined indicator of willingness to the database 215 for storage and potential future use in determining other indicators of willingness.

The battery 220 is adapted to supply or consume energy to/from the distributed energy system via a relay 222, under the control of the processing unit 205. The relay 222 connects the battery with a main plug 250 providing access to the electrical grid The supply or consumption of energy to/from the battery is monitored by the processing unit 205 using the sensor 225 (which is adapted to sense the level of charge in battery and transmit information about the sensed level of charge to the processing unit 205). In this way, the processing unit 205 can calculate energy supply/consumption parameter based on the level of charge in the battery 220.

Based on information received via the communication interface 210 and information about the level of charge in the battery 220, the processing unit 205 calculates an amount of time that is required for energy consumption or supply.

Also, the processing unit 205 calculates the amount of time that is available for energy consumption or supply. This calculation may take into account information obtained from the communication interface 210 and/or the database 215 which indicates particular timing constraints on energy consumption or supply.

Based on pricing information obtained via the communication interface 210 and/or the database 215, the processing unit calculates a probability distribution for the distributed energy system. Using this probability distribution, and the calculated (available and required) times, the processing unit 205 determines an indicator of willingness to consume or supply energy from/to the battery 220 of the device. The determined indicator of willingness can then be provided to a device of the distributed energy system via the communication interface 210 (and may also be stored in the database 215 for future reference).

Since information about pricing in the system and/or an indicator of willingness may be sensitive, the communication interface 210 may be adapted to encrypt/decrypt information for transmission/reception over a secure communication link.

It will be clear to one of ordinary skill in the art that all or part of the method of one embodiment of the present invention may suitably and usefully be embodied in a logic apparatus, or a plurality of logic apparatus, comprising logic elements arranged to perform the steps of the method and that such logic elements may comprise hardware components, firmware components or a combination thereof.

It will be equally clear to one of skill in the art that all or part of a logic arrangement according to one embodiment of the present invention may suitably be embodied in a logic apparatus comprising logic elements to perform the steps of the method, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

It will be appreciated that the method and arrangement described above may also suitably be carried out fully or partially in software running on one or more processors (not shown in the figures), and that the software may be provided in the form of one or more computer program elements carried on any suitable data-carrier (also not shown in the figures) such as a magnetic or optical disk or the like. Channels for the transmission of data may likewise comprise storage media of all descriptions as well as signal-carrying media, such as wired or wireless signal-carrying media.

A method is generally conceived to be a self-consistent sequence of steps leading to a desired result. These steps require physical manipulations of physical quantities. Usually, though not necessarily, these quantities take the form of electrical or magnetic signals capable of being stored, transferred, combined, compared, and otherwise manipulated. It is convenient at times, principally for reasons of common usage, to refer to these signals as bits, values, parameters, items, elements, objects, symbols, characters, terms, numbers, or the like. It should be noted, however, that all of these terms and similar terms are to be associated with the appropriate physical quantities and are merely convenient labels applied to these quantities.

The present invention may further suitably be embodied as a computer program product for use with a computer system. Embodiments may be captured in a computer program product for execution on a processor of a computer, e.g. a microcontroller, a personal computer or a network server, where the computer program product, if executed on the computer, causes the computer to implement the steps of a method according to an embodiment. Since implementation of these steps into a computer program product requires routine skill only for a skilled person, such an implementation will not be discussed in further detail for reasons of brevity only. Such an implementation may comprise a series of computer-readable instructions either fixed on a tangible medium, such as a computer readable medium, for example, e.g. a CD-ROM, DVD, USB stick, memory card, flash memory, network-area storage device, internet-accessible data repository, and so on, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

In one alternative, one embodiment may be realized in the form of a computer implemented method of deploying a service comprising steps of deploying computer program code operable to cause the computer system to perform all the steps of the method when deployed into a computer infrastructure and executed thereon.

In a further alternative, one embodiment may be realized in the form of a data carrier having functional data thereon, the functional data comprising functional computer data structures to, when loaded into a computer system and operated upon thereby, enable the computer system to perform all the steps of the method.

The flowchart and block diagram in the above figures illustrate the architecture, functionality, and operation of possible implementations of systems, methods and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While one or more embodiments have been illustrated in detail, one of ordinary skill in the art will appreciate that modifications and adaptations to those embodiments may be made.

For example, although specific embodiments have been described in relation to distributed energy systems and an electric car or scooter, it will be appreciated that other embodiments may be employed in a wide variety of markets where determination of an optimal indicator of willingness (such as a bid) is useful. Such markets may, for example, include smart power grids or markets for trading products, services, commodities or the like. Also, such devices may, for example, include a smart TV, smart fridge/freezer, etc, Embodiments may therefore be employed in any market where a participant is required to provide an indication of willingness to supply or consume.

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A method of determining an indicator of willingness to supply or consume in a market, the method comprising:
determining the indicator of willingness based on a probability distribution of prices in the market.

2. The method of claim 1, wherein the indicator of willingness comprises at least one of: a price representing a price willing to be paid or received; a volume value representing an amount willing to be supplied or consumed; a rate value representing a rate of consumption or production; and a time value representing a window of consumption or production.

3. The method of claim 1 or 2, wherein the probability distribution is based on historical prices in the market.

4. The method of any preceding claim, further comprising the step of:
calculating the probability distribution of prices in the market.

5. The method of any preceding claim, wherein the step of determining the indicator of willingness is further based on one or more constraints.

6. The method of claim 5, wherein the one or more constraints comprises a margin.

7. The method of any preceding claim, wherein the step of determining the indicator of willingness is further based on: an available time and a minimum required time of consumption or supply.

8. The method of claim 7, wherein the step of determining the indicator of willingness comprises:
calculating a price in the probability distribution that splits the area under the probability distribution into first and second areas, the ratio of the first area to the total area under the probability distribution being equal to the ratio of the minimum required time to the available time for consumption or supply; and
determining the indicator of willingness based on the calculated price.

9. The method of any preceding claim, wherein the market comprises a distributed energy system comprising a plurality of devices adapted to supply or consume energy at various prices.

10. A system adapted to determine an indicator of willingness to supply or consume in a market, the system comprising:
a processing unit adapted to determine the indicator of willingness based on a probability distribution of prices in the market.

11. The system of claim 10, wherein the indicator of willingness comprises a least one of: a price representing a price willing to be paid or received; a volume value representing an amount willing to be supplied or consumed; a rate value representing a rate of consumption or production; and a time value representing a window of consumption or production.

12. The system of claim 10 or 11, wherein the probability distribution comprises historical prices in the market.

13. The system of any of claims 10 to 12, further comprising a:
distribution calculation unit adapted to calculate the probability distribution of prices in the market.

14. A device adapted to supply or consume energy to/from a distributed energy system, the device comprising a system according to any of claims 10 to 13.

15. A computer program product for determining an indicator of willingness to supply or consume in a market, the computer program product comprising a computer-readable storage medium having computer-readable program code embodied therewith, the computer-readable program code configured to perform all of the steps of any of claims 1 to 9.
